# EUROPEAN PATENT SPECIFICATION

(11) **EP 1 329 981 B1**
(45) Date of publication and mention of the grant of the patent: **13.10.2004**
(21) Application number: 03001202.5
(22) Date of filing: 17.01.2003
(51) Int. Cl.: H01Q 1/24, H01Q 1/08, H04B 1/38

(54) **Antenna unit using helical hinge spring**
Aus einer wendelförmigen Gelenkfeder bestehende Antenneneinheit
Unité d'antenne formé par un ressort de chanière hélicoidal

(30) Priority: 18.01.2002 KR 2002002934
(43) Date of publication of application: 23.07.2003
(73) Proprietor: SAMSUNG ELECTRONICS CO., LTD., Suwon-City, Kyungki-do (KR)
(72) Inventor: Kim, Young-Jin, Paldal-gu, Suwon-city, Kyungki-do (KR)
(74) Representative: Lang, Johannes, Dipl.-Ing.

(56) References cited:
- EP-A- 1 263 189
- DE-A- 10 006 530
- US-A- 6 115 886
- US-B1- 6 272 356
- PATENT ABSTRACTS OF JAPAN vol. 2002, no. 02, 2 April 2002 (2002-04-02) & JP 2001 284934 A (KYOCERA CORP), 12 October 2001 (2001-10-12)

## Description

### BACKGROUND OF THE INVENTION

### 1. Field of the Invention

The present invention relates to a portable terminal, and more particularly to an antenna unit using a helical hinge spring installed on the hinge module.

### 2. Description of the Related Art

Usually, a portable terminal refers to a portable unit for communicating with a counterpart via wireless communication with a base station. These portable terminals are divided into several types, e.g., bar-type terminals, flip-type terminals, folder-type terminals, flip up-type terminals, and folder-type terminals for being also used as a PDA, according to their shape. Further, the portable telephone terminals may be divided into telephone terminals for voice communication, telephone terminals for picture communication, telephone terminals for Internet communication, telephone terminals for Internet gaming, and telephone terminals for chatting, according to their function. Moreover, the portable telephone terminals may be divided into necklace types, wristlet types, and pocket-sized types, according to their wearing locations.

Each of the aforementioned individual portable terminals essentially comprises an antenna unit, a data input/output unit, and a data transmitting/receiving unit to facilitate communication with the counterpart. As the usually used data input unit, a keypad or a touch sensitive panel is employed. The keypad comprises an array of a plurality of keys for inputting data by a pressing action. The touch sensitive panel serves to input data by a touching action. Further, a display such as a LCD (Liquid Crystal Display) module is also commonly used as the data output unit. A microphone unit is used as the data transmitting unit and a speaker unit is used as the data receiving unit.

Portable terminals having multiple functionality and that are suitable for various multimedia environments are being spotlighted and popularized.

In order to transmit/receive radio waves, conventional portable terminals essentially comprises an antenna, a power-feeding portion, and an RF (Radio Frequency) unit. The conventional antennas of the portable terminal are divided into two types, i.e., an internal type and an external type. The internal type antenna is installed within a main housing of the portable terminal. The external type antenna protrudes from the main housing of the portable terminal and is exposed to the outside. As the conventional antenna, a helical antenna or a whip antenna is usually employed. Herein, the helical antenna serves as a main antenna and the whip antenna serves as an auxiliary antenna.

However, in case of using an internal type antenna installed on a designated area of a printed circuit board within the main housing of the portable terminal, the portable terminal requires an internal space for accommodating the internal type antenna, making it difficult to effectively utilize the limited space available within the main body of the portable terminal. That is, the portable terminal using the internal antenna has a drawback of increasing the size of the printed circuit board.

On the other hand, the external type antenna protrudes from the main body of the portable terminal, thereby limiting the external design of the portable terminal. Further, when the portable terminal falls to the ground due to the user's carelessness, the external type antenna is easily broken. Since the external antenna of the portable telephone terminal protrudes from the main body housing, this protruded external antenna of the portable terminal is easily damaged.

### SUMMARY OF THE INVENTION

Therefore, the present invention has been made in view of the above problems, and it is an object of the present invention to provide a portable terminal comprising an antenna unit using a hinge spring, thereby maintaining antenna characteristics and not requiring a further space for accommodating the antenna unit.

It is another object of the present invention to provide a portable terminal comprising an antenna unit using a hinge spring, which satisfies a miniaturization trend.

In is yet another of the present invention to provide a portable terminal comprisings an antenna unit using a hinge spring, which can be used as an auxiliary antenna.

In accordance with one aspect of the present invention, the above and other objects can be accomplished by the portable terminal as set out in the appended claims.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view of a portable terminal in which a sub housing is closed;
Fig. 2 is a perspective view of the portable terminal in which the sub housing is open;
Fig. 3 is a partial cut-away plan view of the portable terminal in which the sub housing is open, showing in cut-away an antenna unit using a helical hinge spring in accordance with the first preferred embodiment of the present invention;
Fig. 4 is a partially exploded plan view of the antenna unit using the helical hinge spring in accordance with the first embodiment of the present invention;
Fig. 5 is a cross-sectional view of the antenna unit of Fig. 4;
Fig. 6 is a partially exploded plan view of an antenna unit using a helical hinge spring in accordance with a second preferred embodiment of the present invention;
Fig. 7 is a cross-sectional view of the antenna unit of Fig. 6;

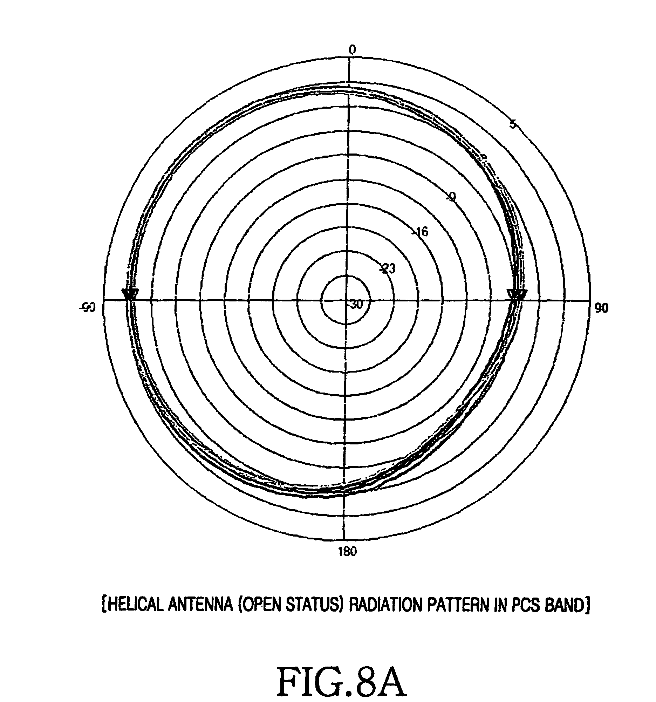

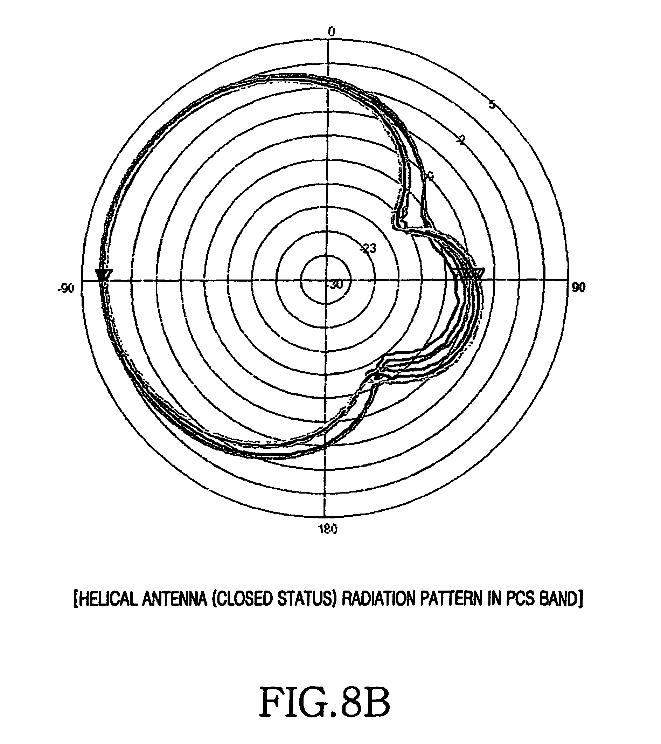

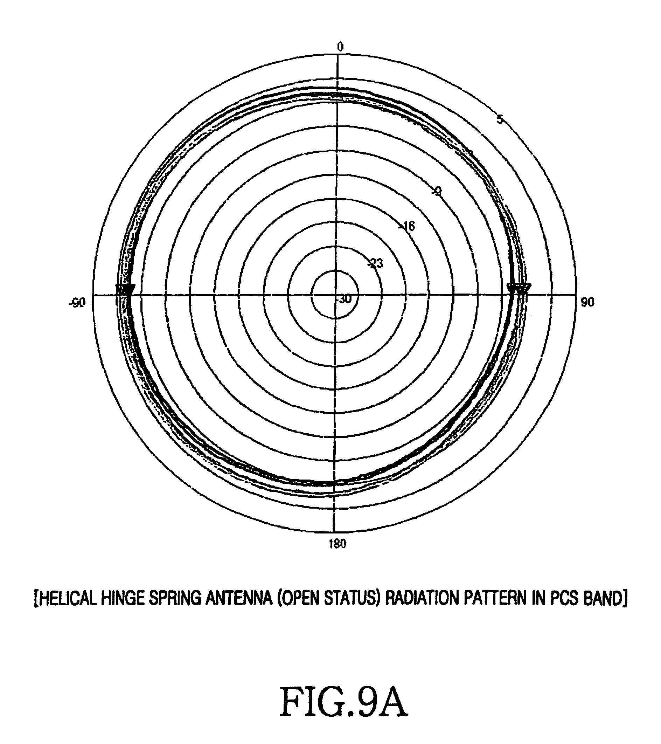

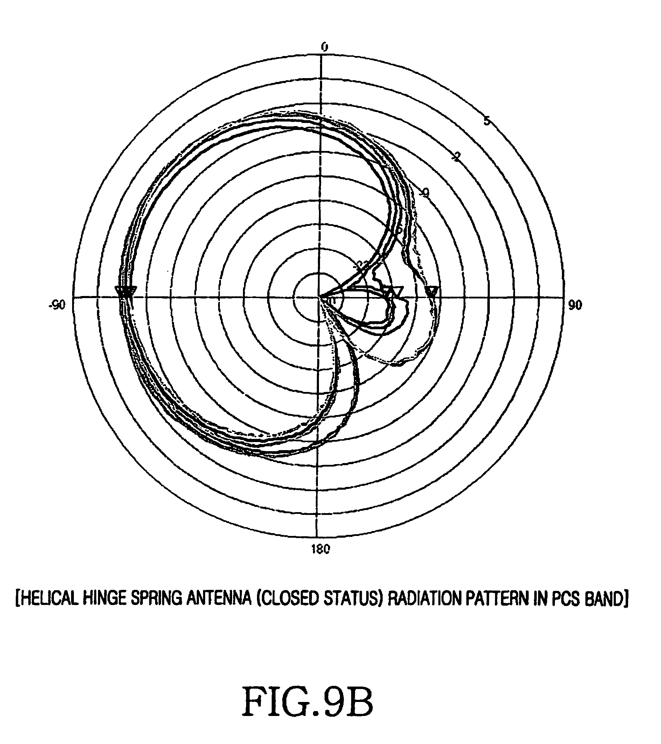

Fig. 8a is a graph showing a radiation pattern illustrating the antenna characteristics of a conventional antenna unit using a helical antenna at Korean PCS band (1,750∼1,870MHz) in an open status of a sub housing; Fig. 8b is a graph showing a radiation pattern illustrating the antenna characteristics of the conventional antenna unit using the helical antenna at Korean PCS band (1,750∼1,870MHz) in a closed status of the sub housing; Fig. 9a is a graph showing a radiation pattern illustrating the antenna characteristics of the antenna unit using the helical hinge spring at Korean PCS band (1,750∼1,870MHz) in an open status of a sub housing in accordance with the first embodiment of the present invention; Fig. 9b is a graph showing a radiation pattern illustrating the antenna characteristics of the antenna unit using the helical hinge spring at Korean PCS band (1,750∼1,870MHz) in a closed status of the sub housing in accordance with the first embodiment of the present invention;

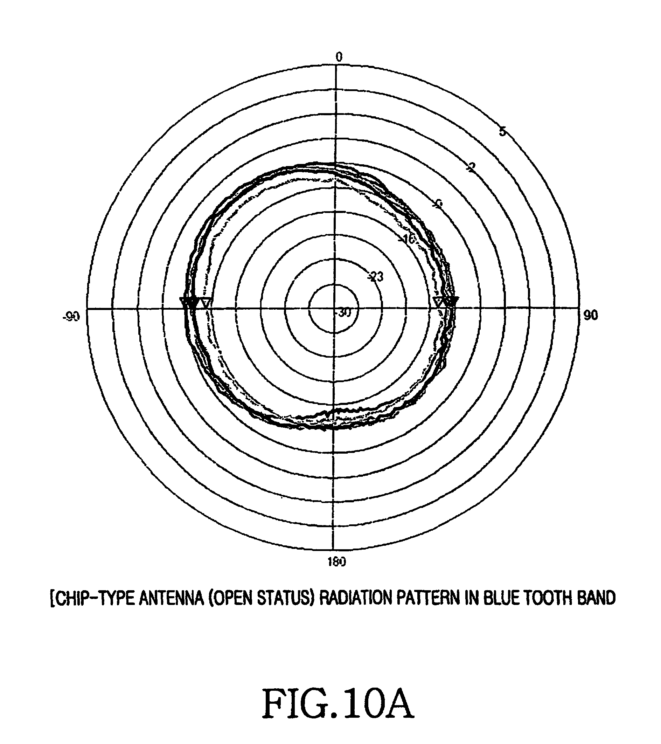

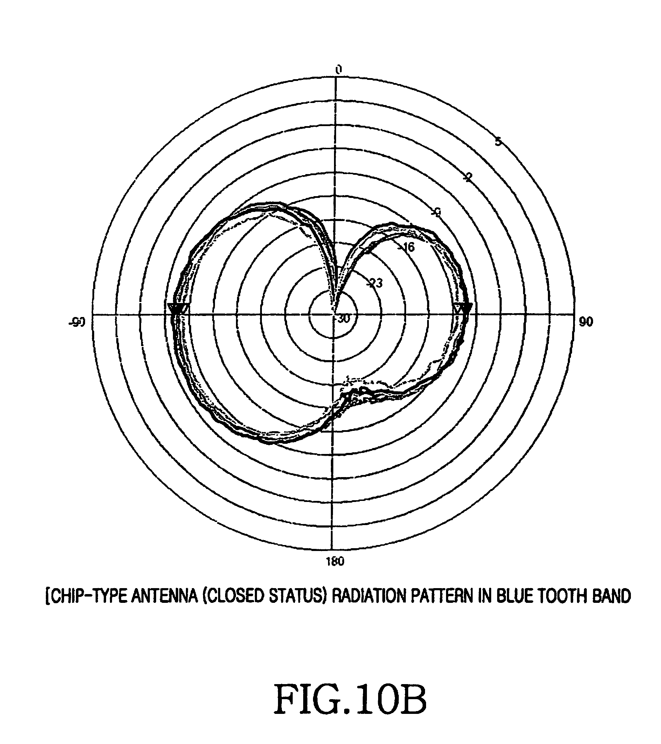

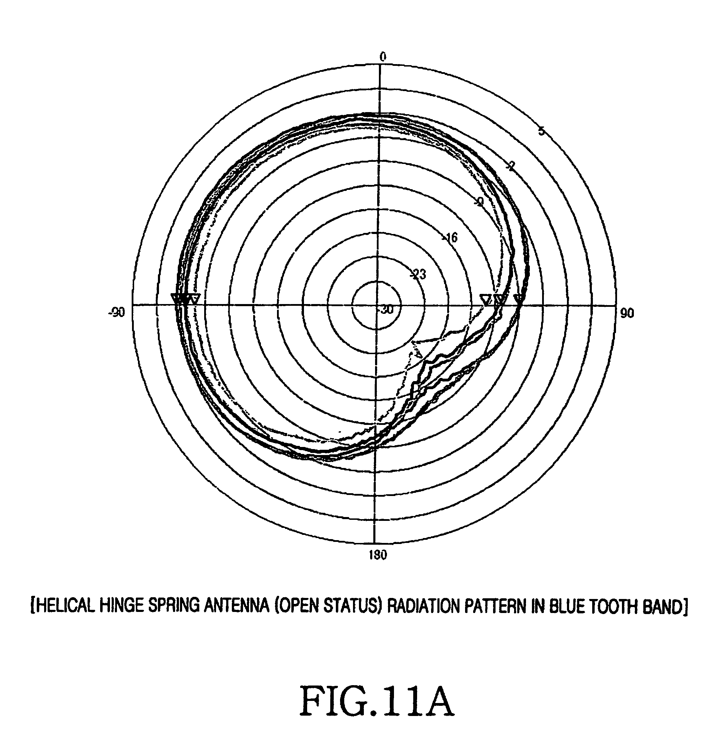

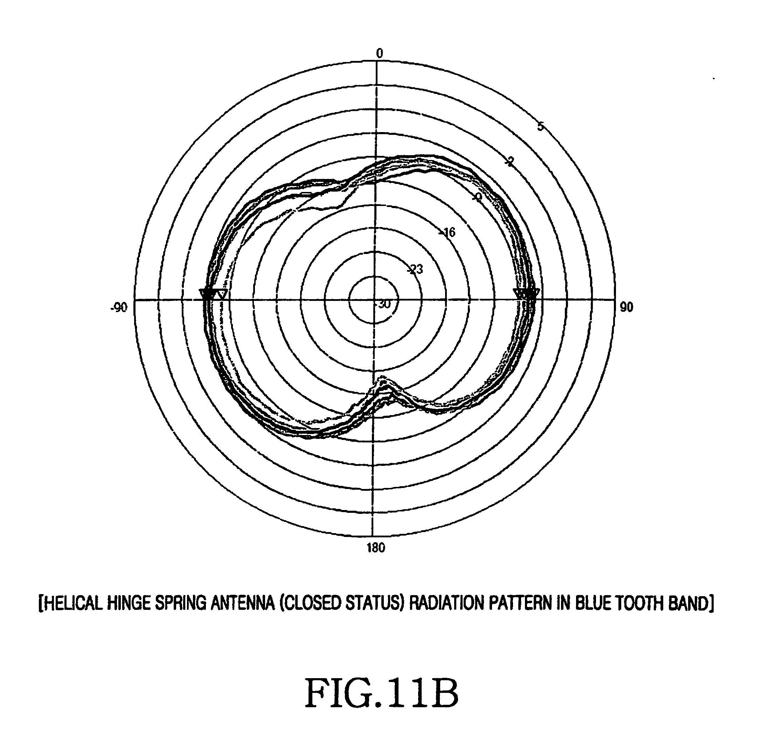

Fig. 10a is a graph showing a radiation pattern illustrating the antenna characteristics of a conventional chip type antenna at BT (Blue Tooth) band (2,400∼2,483MHz) in an open status of a sub housing; Fig. 10b is a graph showing a radiation pattern illustrating the antenna characteristics of the conventional chip type antenna at BT (Blue Tooth) band (2,400∼2,483MHz) in a closed status of the sub housing; Fig. 11a is a graph showing a radiation pattern illustrating the antenna characteristics of the antenna unit using the helical hinge spring at BT (Blue Tooth) band (2,400∼2,483MHz) in an open status of a sub housing in accordance with the first embodiment of the present invention; and Fig. 11b is a graph showing a radiation pattern illustrating the antenna characteristics of the antenna unit using the helical hinge spring at BT (Blue Tooth) band (2,400∼2,483MHz) in a closed status of the sub housing in accordance with the first embodiment of the present invention.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations is omitted to avoid making the subject matter of the present invention unclear.

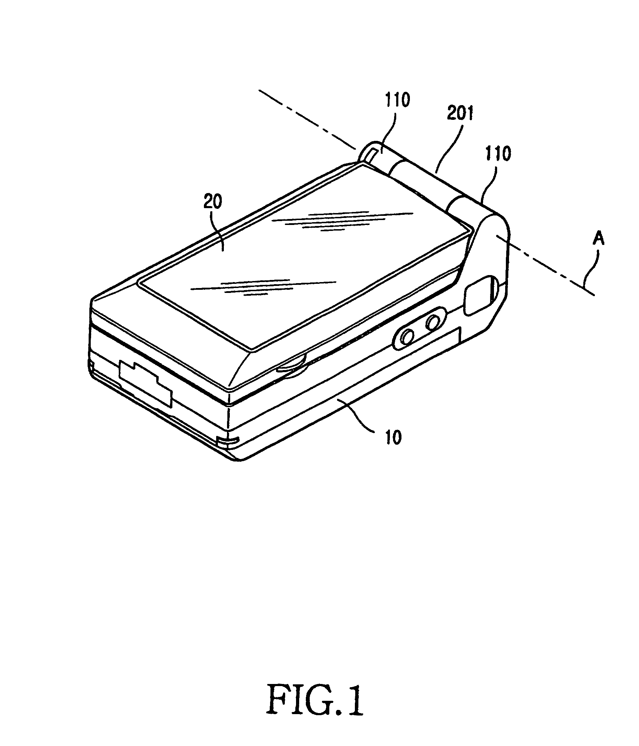

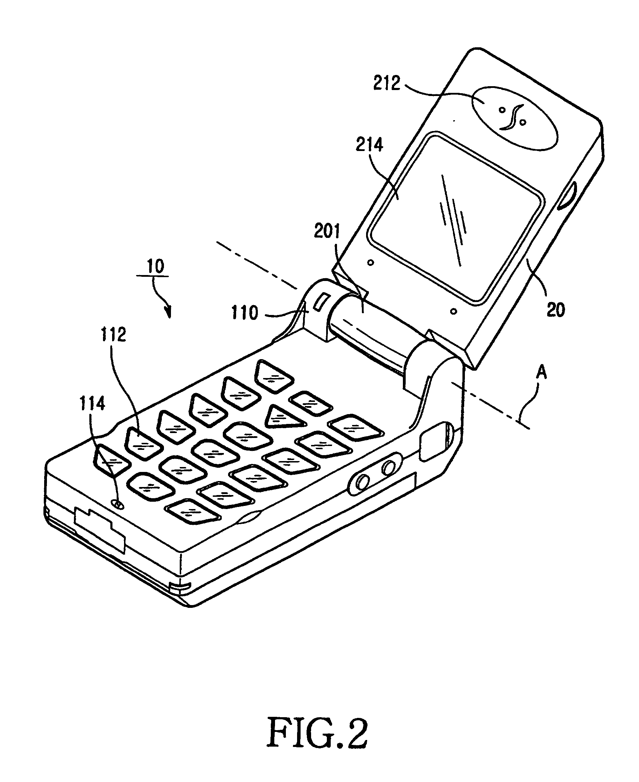

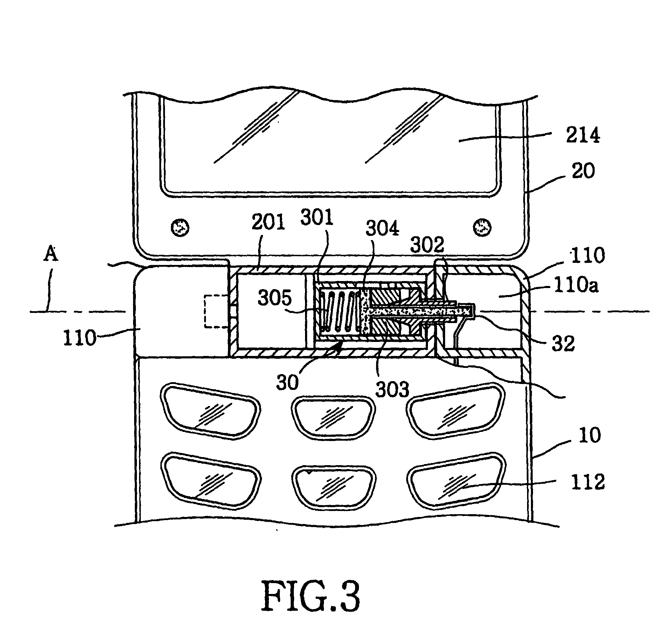

Fig. 1 is a perspective view of a portable terminal in which a sub housing is closed, and Fig. 2 is a perspective view of the portable terminal in which the sub housing is open. The portable terminal of Figs. 1 and 2also comprises an antenna unit (shown in Fig. 3) using a helical hinge spring in accordance with the first preferred embodiment of the present invention. The portable terminal comprises a main housing 10, a sub housing 20, and a hinge unit. The hinge unit rotatably connects the sub housing 20 to the main housing 10, thereby opening and closing the sub housing 20 from and into the main housing 10. That is, the sub housing 20 rotatably moves on a rotation axis A within a designated angle. The main housing 10 comprises a key array consisting of a plurality of keys 112, and a microphone unit 114. The sub housing 20 comprises a speaker unit 212 and a LCD 214.

The main housing 10 includes two side hinge arms 110. One side hinge arm 110 is symmetrically opposite to the other side hinge arm 110. The sub housing 20 includes a center hinge arm 201. The center hinge arm 201 of the sub housing 20 is held between the two side hinge arms 110 of the main housing 10 by the hinge unit.

As shown in Fig. 3, a hinge module 30 applied to the portable terminal functions first to rotatably connect the sub housing 20 to the main housing 10 and secondarily to provide a force for closing the sub housing 20 within a first range of designated angles (0°∼45°), provide a force for opening the sub housing 20 in a second range of more than the first range of designated angles (45°∼140°), and provide a force for stopping the motion of the sub housing 20 at another third designated angle (140°). That is, the hinge module 30 of the portable terminal provides a user with a force for easily opening and closing the sub housing 20 from and into the main housing 10. Therefore, the hinge module 30 essentially comprises a hinge shaft 302, a hinge cam 303, and a helical hinge spring 305. Further, a hinge housing 301 may be used to separately assemble the hinge shaft 302, the hinge cam 303, and the helical hinge spring 305 of the hinge module 30.

The hinge module 30 of the first preferred embodiment of the present invention, particularly the helical hinge spring 305 is used as the antenna unit. Fig. 3 shows the antenna unit using the helical hinge spring 305 of the hinge module 30 in accordance with the first embodiment of the present invention.

As shown in Fig. 3, the antenna unit of the first embodiment of the present invention comprises the hinge module 30, more particularly the helical hinge spring 305 accommodated within the hinge housing 301, a conductive member 304, and a plate spring 32 located within internal space 110a of side hinge arm 110. The conductive member 304 is accommodated within the hinge housing 301 so as to electrically connect the helical hinge spring 305 to a power-feeding portion (not shown). The plate spring 32 is closely adhered to the conductive member 304, thereby electrically connecting the conductive member 304 to the power-feeding portion.

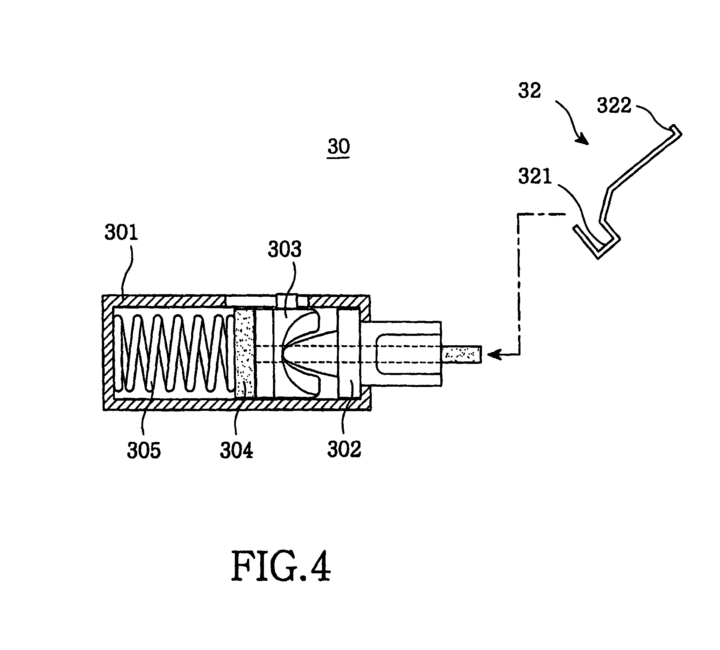

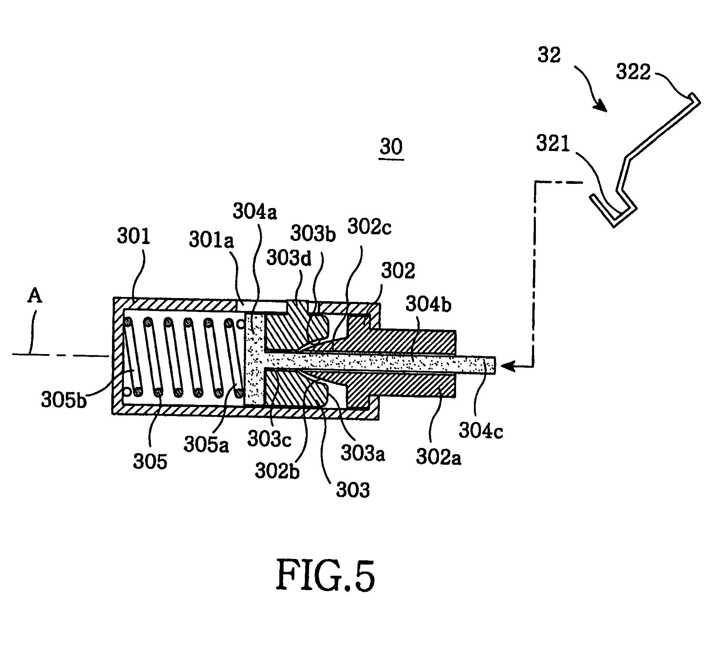

Fig. 4 is a partially exploded plan view of the antenna unit using the helical hinge spring in accordance with the first preferred embodiment of the present invention, and Fig. 5 is a cross-sectional view of the antenna unit of Fig. 4. Hereinafter, with reference to Figs. 4 and 5, the antenna unit of the first preferred embodiment of the present invention is described in detail.

As shown in Figs. 4 and 5, the antenna unit of the first embodiment of the present invention utilizes the hinge module 30. In order to supply a force for opening and closing the sub housing, the hinge module comprises the hinge housing 301, the hinge shaft 302, the hinge cam 303, and the helical hinge spring 305. The antenna unit of the first embodiment of the present invention is embodied using the helical hinge spring 305 installed on the hinge module and the conductive member 304 separate from the helical hinge spring 305.

The hinge housing 301 is installed on the center hinge arm 201 of the sub housing 20, and accommodates the hinge shaft 302, the hinge cam 303, the conductive member 304, and the helical hinge spring 305. One end 302a of the hinge shaft 302 is engaged with the side hinge arm 110 of the main housing 10 and the other end 302b of the hinge shaft 302 is a convex portion. Further, a through hole 302c is formed in the hinge shaft 302 along the hinge axis. The hinge shaft 302 is fixedly attached to the side hinge arm 110. Therefore, as the sub housing 20 is opened and closed from and into the main housing 10, the hinge cam 303 slides due to its engagement with convex portion 302b of hinge shaft 302.

The hinge cam 303 includes convex portion 303a and a concave portion 303b. A protrusion 303d is formed on the outer circumference of the hinge cam 303; the protrusion 303d guides the hinge cam 303 forward and backward within the hinge housing 301. The hinge cam 303 is slid by the hinge shaft 302, and thereby moves forward and backward along the length direction of the hinge housing 301. A through hole 303c is formed in the hinge cam 303 along the hinge axis.

The conductive member 304 includes a contact portion 304a disposed between the hinge cam 303 and the helical hinge spring 305 and being in contact with one end 305a of the helical hinge spring 305, and a center portion 304b being inserted into the through hole 303c of the hinge cam 303 and the through hole 302c of the hinge shaft 302. A terminal 304c of the center portion 304b of the conductive member 304 has a designated length so as to protrude from the surface of the hinge shaft 302. The diameter of the center portion 304b of the conductive member 304 is smaller than that of the through holes 302c and 303c. Therefore, the conductive member 304 is not influenced by the straight-line motion of the hinge shaft 302 or the hinge cam 303.

The helical hinge spring 305 is disposed between the hinge housing 301 and the conductive member 304. One end 305a of the helical hinge spring 305 is always in contact with the contact portion 304a of the conductive member 304, thereby functioning to closely adhere the hinge shaft 302 to the hinge cam 303.

The plate spring 32 is made of a conductive material with elasticity. The plate spring 32 includes two free terminals, i.e., a first free terminal 321 and a second free terminal 322. The first free terminal 321 of the plate spring 32 is bent to be connected to the terminal 304c of the center portion 304b of the conductive member 304, and the second free terminal 322 of the plate spring 32 is connected to the power-feeding portion of a main printed circuit board (not shown). Herein, the first free terminal 321 of the plate spring 32 is closely adhered to the terminal 304c of the conductive member 304 by an elastic force of the plate spring 32.

When the sub housing is opened and closed from and into the main housing, the hinge shaft 302 is bound by one of the side hinge arms 110, and the hinge cam 303 moves forward and backward by the hinge shaft 302. Then, the helical hinge spring 305 is compressed and then extends. Further, the conductive member 304 is maintained in close adherence with the hinge spring 305. Therefore, the helical hinge spring 305 is always electrically connected to the plate spring 32 by the conductive member 304, and is connected to the power-feeding portion via the plate spring 32.

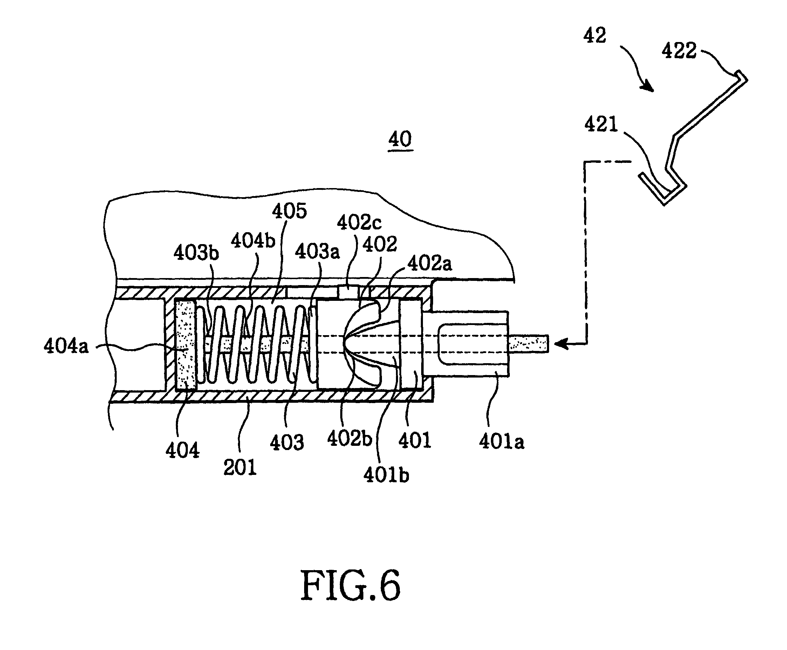

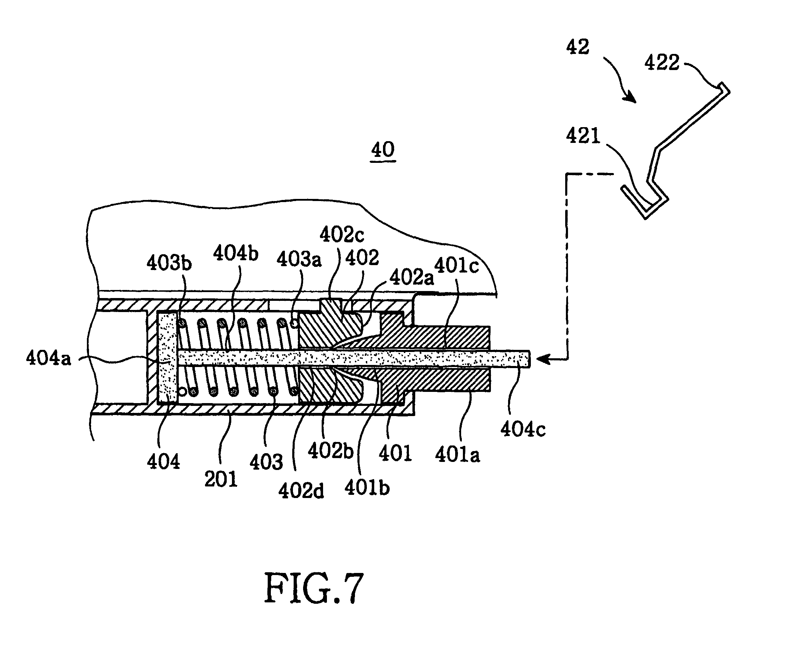

Fig. 6 is a partially exploded plan view of an antenna unit using a helical hinge spring in accordance with a second preferred embodiment of the present invention, and Fig. 7 is a cross-sectional view of the antenna unit of Fig. 6. Hereinafter, with reference to Figs. 6 and 7, the antenna unit using the helical hinge spring 403 of the second preferred embodiment of the present invention is described in detail. As shown in Figs. 6 and 7, the antenna unit using the helical hinge spring 403 of the second embodiment of the present invention utilizes a hinge module 40. In order to supply a force for opening and closing the sub housing, the hinge module 40 serving as the hinge means of the portable terminal comprises a hinge shaft 401, a hinge cam 402, and the helical hinge spring 403. The antenna unit of the second embodiment of the present invention is embodied using the helical hinge spring 403 installed on the hinge module 40 and a conductive member 404.

The hinge shaft 401, the hinge cam 402, the conductive member 404, and the helical hinge spring 403 are accommodated within a hinge receptor 405 installed within the center hinge arm 201 of the sub housing 20. One end 401a of the hinge shaft 401 protrudes from the hinge receptor and the other end 401b of the hinge shaft 401 is a convex portion. A through hole 401c is formed in the hinge shaft 401 along the hinge axis.

The hinge cam 402 includes a convex portion 402a and a concave portion 402b. A protrusion 402c is formed on the outer circumference of the hinge cam 402, thereby moving the hinge cam 402 forward and backward within the hinge receptor. The hinge cam 402 is slid by the hinge shaft 401, thereby moving forward and backward along the length direction of the hinge receptor 405. A through hole 402d is formed in the hinge cam 402 along the hinge axis.

The conductive member 404 includes a contact portion 404a disposed between one end 403b of the helical hinge spring 403 and a separation wall of the hinge receptor 405 and being in contact with the end 403b of the helical hinge spring 403, and a center portion 404b disposed within the helical hinge spring 403 and inserted into the through hole 402d of the hinge cam 402 and the through hole 401c of the hinge shaft 401. A terminal 404c of the center portion 404b of the conductive terminal 404 has a designated length so as to protrude from the surface of the hinge shaft 401. The diameter of the center portion 404b of the conductive member 404 is smaller than that of the through holes 401c and 402d. Therefore, the conductive member 404 is not influenced by the straight-line motion of the hinge shaft 401 and the hinge cam 402.

The helical hinge spring 403 is disposed between the hinge shaft 401 and the conductive member 404. One end 403b of the helical hinge spring 403 is always in contact with the contact portion 404a of the conductive member 404, thereby functioning to closely adhere the hinge shaft 401 to the hinge cam 402.

A plate spring 42 is made of a conductive material. The plate spring 42 includes two free terminals, i.e., a first free terminal 421 and a second free terminal 422. The first free terminal 421 of the plate spring 42 is bent to be connected to the terminal 404c of the center portion 404b of the conductive member 404, and the second free terminal 422 of the plate spring 42 is connected to the power-feeding portion (not shown). Herein, the first free terminal 421 of the plate spring 42 is closely adhered to the terminal 404c of the conductive member 404 by an elastic force of the plate spring 42.

When the sub housing is opened and closed from and into the main housing, the hinge shaft 401 is bound by one of the side hinge arms 110, and the hinge cam 402 moves forward and backward over the convex portion 401b of the hinge shaft 401. Then, the helical hinge spring 403 is compressed and expanded . Further, the hinge spring 403 is maintained to be in close adherence with the contact portion 404a of the conductive member 404. Therefore, the helical hinge spring 403 is always electrically connected to the plate spring 42 by the conductive member 404, and is electrically connected to the power-feeding portion via the plate spring 42.

Hereinafter, with reference to Figs. 8a to 11b, the antenna characteristics of the antenna unit using the helical hinge spring in accordance with the first embodiment of the present invention is described in comparison with the conventional antenna unit.

Fig. 8a is a graph showing a radiation pattern illustrating the antenna characteristics of a conventional antenna unit using a helical antenna at Korean PCS band (1,750∼1,870MHz) in an open status of a sub housing, and Fig. 8b is a graph showing a radiation pattern illustrating the antenna characteristics of the conventional antenna unit using the helical antenna at Korean PCS band (1,750∼1,870MHz) in a closed status of the sub housing.

Fig. 9a is a graph showing a radiation pattern illustrating the antenna characteristics of the antenna unit using the helical hinge spring at Korean PCS band (1,750∼1,870MHz) in an open status of a sub housing in accordance with the first embodiment of the present invention, and Fig. 9b is a graph showing a radiation pattern illustrating the antenna characteristics of the antenna unit using the helical hinge spring at Korean PCS band (1,750∼1,870MHz) in a closed status of the sub housing in accordance with the first embodiment of the present invention.

As shown in Figs. 8a to 9b, a peak gain and a gain of a +90 direction of the antenna unit using the helical hinge spring of the first embodiment of the present invention in the closed status of the sub housing are a little lower than those of the conventional antenna unit. However, those gains of the antenna unit using the helical hinge spring of the first embodiment of the present invention in the open status of the sub housing are higher than those of the conventional antenna unit

Fig. 10a is a graph showing a radiation pattern illustrating the antenna characteristics of the conventional chip type antenna at BT (Blue Tooth) band (2,400∼2,483MHz) in an open status of a sub housing, and Fig. 10b is a graph showing a radiation pattern illustrating the antenna characteristics of the conventional chip type antenna at BT (Blue Tooth) band (2,400∼2,483MHz) in a closed status of the sub housing.

Fig. 11a is a graph showing a radiation pattern illustrating the antenna characteristics of the antenna unit using the helical hinge spring at BT (Blue Tooth) band (2,400∼2,483MHz) in an open status of a sub housing in accordance with the first embodiment of the present invention, and Fig. 11b is a graph showing a radiation pattern illustrating the antenna characteristics of the antenna unit using the helical hinge spring at BT (Blue Tooth) band (2,400∼2,483MHz) in a closed status of the sub housing in accordance with the first embodiment of the present invention.

As shown in Figs. 10a to 11b, the peak gain and an average gain of the antenna unit using the helical hinge spring of the first embodiment of the present invention in the open and closed status of the sub housing are higher than those of the conventional antenna unit. The helical hinge spring of the present invention has a diameter of approximately 4.3mm and a length of approximately 9.5mm. Therefore, if the helical hinge spring has a greater diameter and length using a bigger hinge module, an antenna unit with further improved antenna characteristics can be obtained.

Additionally, the helical hinge spring of the present invention is designed to satisfy the antenna characteristics by adjusting the diameter and the length of the helical hinge spring, thereby being used as various kinds of antennas.

Consequently, the antenna unit using helical hinge spring of the present invention can be substituted for the conventional antenna at Korean PCS band or BT (Blue Tooth) band. Therefore, the antenna unit of the present invention satisfies the miniaturization of the main body of the portable terminal, improves a portable function of the portable terminal, and allows more flexible designing of an external appearance of the portable terminal.

For example, as the hinge module is enlarged by the increase of the size of the main body of the terminal, the length and/or diameter of the helical hinge spring may also be increased, thereby improving the antenna gain by the helical hinge spring.

As apparent from the above description, according to the present invention, the antenna unit is obtained using a hinge module, thereby allowing more flexible designing of an external appearance of the portable terminal using the antenna and reducing the production cost of the antenna. Further, the present invention does not require an internal space for accommodating an additional antenna, thereby maximizing space utilization and satisfying a lightweight trend. Moreover, the antenna unit of the present invention can be used as a supplementary antenna of a dual band terminal operated at a combined band of PCS, CDMA, AMPS, GSM, GPS, BT (blue tooth), and so on, and as a diversity antenna for increasing the data speed of a terminal requiring a super high-speed data communication such as a HDR

## Claims

1. A portable terminal comprising a main housing (10), a sub housing (20), and a hinge module (30) rotatably opening and closing the sub housing (20) from and into the main housing (10) and including a hinge shaft (302) having one end fixedly attached to the main housing (10) and the other end positioned within the sub housing (20) and serving to interconnect the main housing (10) and the sub housing (20), a hinge cam (303) being slid by the hinge shaft (302) and moving forward and backward, a helical hinge spring disposed in a direction of a hinge axis and providing a force for closely adhering the hinge shaft (302) to the hinge cam (303), and a hinge housing (301) for accommodating the hinge shaft (302), the hinge cam (303), and the helical hinge spring (305), said portable terminal further comprising:
a conductive member (304) including a contact portion (304a) disposed between the helical hinge spring (305) and the hinge cam (303) and closely adhered to the helical hinge spring (305), and a center portion (304b) extending from a center of the contact portion (304a) in the direction of the hinge axis and passing through the hinge cam (303) and the hinge shaft (302), such that the helical hinge spring (305) is adapted to serve as a helical antenna of the portable terminal.

2. The portable terminal of claim 1, further comprising a plate spring (32) with a first free terminal connected to the conductive member (304) and a second free terminal connected to a power-feeding portion.

3. The portable terminal of claim 1, wherein the hinge shaft (302) comprises a first through hole (302c) along the hinge axis and the hinge cam (303) comprises a second through hole (303c) along the hinge axis so that the center portion (304b) of the conductive member (304) passes through the first and second through holes (302c,303c).

4. The portable terminal of claim 3, wherein the diameter of the first and second through holes is greater than that of the center portion of the conductive member.

5. The portable terminal of claim 1, wherein a terminal (304c) of the center portion (304b) of the conductive member (304) protrudes from the hinge shaft (302).

6. The portable terminal of claim 2, wherein the first free terminal of the plate spring (32) is closely adhered to a terminal (304c) of the center portion (304b) of the conductive member (304) by an elastic force of the plate spring (32).

7. A portable terminal comprising a main housing (10), a sub housing (20), and a hinge receptor rotatably opening and closing the sub housing (20) from and into the main housing (10) and including a hinge shaft (302) having one end fixedly attached to the main housing (10) and the other end positioned within the sub housing (20) and serving to interconnect the main housing (10) and the sub housing (20), a hinge cam (303) being slid by the hinge shaft (302) and moving forward and backward, and a helical hinge spring disposed in a direction of a hinge axis and providing a force for closely adhering the hinge shaft (302) to the hinge cam (303), said portable terminal further comprising:
a conductive member (304) including a contact portion (304a) closely adhered to the helical hinge spring (305), and a center portion (304b) extending from a center of the contact portion (304c) in the direction of the hinge axis and passing through the the helical hinge spring (305), the hinge cam (303) and the hinge shaft (302).

8. The portable terminal of claim 7, further comprising a plate spring (32) with a first free terminal connected to the conductive member (304) and a second free terminal connected to a power-feeding portion.

9. The portable terminal of claim 7, wherein the hinge shaft (302) comprises a first through hole (302c) along the hinge axis and the hinge cam (303) comprises a second through hole (303c) along the hinge axis so that the center portion (304b) of the conductive member (304) passes through the first and second through holes (302c,303c).

10. The portable terminal of claim 9, wherein the diameter of the first and second through holes (302c,303c) is greater than that of the center portion (304b) of the conductive member (304).

11. The portable terminal of claim 7, wherein a terminal (304c) of the center portion (304b) of the conductive member (304) protrudes from the hinge shaft (302).

12. The portable terminal of claim 8, wherein the first free terminal of the plate spring (32) is closely adhered to a terminal (304c) of the center portion (304b) of the conductive member (304) by an elastic force of the plate spring.

## Patentansprüche

1. Tragbares Endgerät, aufweisend ein Hauptgehäuse (10), ein Untergehäuse (20) und ein Scharniermodul (30), welches das Untergehäuse (20) rotierbar vom und in das Hauptgehäuse (10) öffnet und schließt und welches einen Scharnierstift (302) umfasst, der ein Ende fest am Hauptgehäuse (10) befestigt hat und das andere Ende innerhalb des Untergehäuses (20) angeordnet hat und der dazu dient, das Hauptgehäuse (10) und das Untergehäuse (20) miteinander zu verbinden, ein Scharnieransatzstück (303), das durch den Scharnierstift (302) geschoben wird und sich hin- und herbewegt, eine spiralförmige Scharnierfeder, die in der Richtung der Scharnierachse angeordnet ist und eine Kraft liefert, um den Scharnierstift (302) eng am Scharnieransatzstück (303) anliegen zu lassen, und ein Scharniergehäuse (301), um den Scharnierstift (302), das Scharnieransatzstück (303) und die spiralförmige Schamierfeder (305) aufzunehmen, wobei das tragbare Endgerät weiterhin aufweist:
ein leitendes Teil (304), das einen Kontaktabschnitt (304a) umfasst, der zwischen der spiralförmigen Scharnierfeder (305) und dem Schamieransatzstück (303) angeordnet ist und der spiralförmigen Schamierfeder (305) eng anhaftet, und einen Mittelabschnitt (304b), der sich von der Mitte des Kontaktabschnitts (304a) in die Richtung der Scharnierachse erstreckt und das Scharnieransatzstück (303) und den Scharnierstift (302) durchläuft, so dass die spiralförmige Scharnierfeder (305) angepasst ist als Spiralantenne des tragbaren Endgeräts zu dienen.

2. Tragbares Endgerät gemäß Anspruch 1, weiterhin aufweisend eine Blattfeder (32) mit einem ersten freien Ende, das an das leitende Teil (304) angeschlossen ist, und einem zweiten freien Ende, das mit einem stromzuführenden Teil verbunden ist.

3. Tragbares Endgerät gemäß Anspruch 1, worin der Scharnierstift (302) ein erstes Durchgangsloch (302c) entlang der Scharnierachse aufweist, und das Scharnieransatzstück (303) ein zweites Durchgangsloch (303c) entlang der Scharnierachse aufweist, so dass der Mittelabschnitt (304b) des leitenden Teils (304) das erste und das zweite Durchgangsloch (302c, 303c) durchläuft.

4. Tragbares Endgerät gemäß Anspruch 3, worin der Durchmesser des ersten und zweiten Durchgangslochs größer ist als derjenige des Mittelabschnitts des leitenden Teils.

5. Tragbares Endgerät gemäß Anspruch 1, worin ein Ende (304c) des Mittelabschnitts (304b) des leitenden Teils (304) aus dem Scharnierstück (302) herausragt.

6. Tragbares Endgerät gemäß Anspruch 2, worin das erste freie Ende der Blattfeder (32) eng an einem Ende (304c) des Mittelabschnitts (304b) des leitenden Teils (304) angelegt wird durch eine elastische Kraft der Blattfeder (32).

7. Tragbares Endgerät, aufweisend ein Hauptgehäuse (10), ein Untergehäuse (20) und ein Scharnier, welches das Untergehäuse (20) rotierbar vom und in das Hauptgehäuse (10) öffnet und schließt und einen Scharnierstift (302) umfasst, der ein Ende fest an das Hauptgehäuse (10) befestigt hat und das andere Ende innerhalb des Untergehäuses (20) angeordnet, und der dazu dient, das Hauptgehäuse (10) und das Untergehäuse (20) miteinander zu verbinden, ein Scharnieransatzstück (303), das durch den Scharnierstift (302) geschoben wird und sich hin- und herbewegt, eine spiralförmige Scharnierfeder, die in Richtung der Scharnierachse angeordnet ist und die eine Kraft liefert, um den Scharnierstift (302) eng an das Scharnieransatzstück (303) anliegen zu lassen, wobei das tragbare Endgerät weiterhin aufweist:
ein leitendes Teil (304), das einen Kontaktabschnitt (304a) umfasst, der an der spiralförmigen Scharnierfeder (305) eng anliegt, und einen Mittelabschnitt (304b), der sich von einer Mitte des Kontaktabschnitts (304a) in Richtung der Scharnierachse erstreckt und die spiralförmige Schamierfeder (305), das Scharnieransatzstück (303) und den Scharnierstift (302) durchläuft.

8. Tragbares Endgerät gemäß Anspruch 7, weiterhin aufweisend eine Blattfeder (32) mit einem ersten freien Ende, das an das leitende Teil (304) verbunden ist, und einem zweiten freien Ende, das mit einem stromzuführenden Teil verbunden ist.

9. Tragbares Endgerät gemäß Anspruch 7, worin der Scharnierstift (302) ein erstes Durchgangsloch (302c) entlang der Scharnierachse aufweist, und das Scharnieransatzstück (303) ein zweites Durchgangsloch (303c) entlang der Scharnierachse aufweist, so dass der Mittelabschnitt (304b) des leitenden Teils (304) das erste und zweite Durchgangsloch (302c, 303c) durchläuft.

10. Tragbares Endgerät gemäß Anspruch 9, worin der Durchmesser des ersten und zweiten Durchgangslochs (302c, 303c) größer ist als der Mittelabschnitt (304b) des leitenden Teils (304).

11. Tragbares Endgerät gemäß Anspruch 7, worin ein Ende (304c) des Mittelabschnitts (304b) des leitenden Teils (304) aus dem Scharnierstift (302) herausragt.

12. Tragbares Endgerät gemäß Anspruch 8, worin das erste freie Ende der Blattfeder (32) durch eine elastische Kraft der Blattfeder (32) eng an ein Ende (304c) des Mittelabschnitts (304b) des leitenden Teils (304) angelegt wird.

## Revendications

1. Terminal portable comprenant un boîtier principal (10), un boîtier secondaire (20) et un module de charnière (30) ouvrant et refermant par rotation le boîtier secondaire (20) à partir du et sur le boîtier principal (10) et comprenant une tige de charnière (302) ayant une extrémité montée de manière solidaire sur le boîtier principal (10) et l'autre extrémité logée dans le boîtier secondaire (20) et servant à interconnecter le boîtier principal (10) et le boîtier secondaire (20), une came de charnière (303) coulissant sur la tige de charnière (302) et se déplaçant en va-et-vient, un ressort hélicoïdal de charnière disposé dans la direction de l'axe de la charnière et exerçant une force pour appliquer étroitement la tige de charnière (302) sur la came de charnière (303), et un carter de charnière (301) destiné à recevoir la tige de charnière (302), la came de charnière (303) et le ressort hélicoïdal de charnière (305), ledit terminal portable comprenant en outre :
un élément conducteur (304) comprenant une partie de contact (304a), disposée entre le ressort hélicoïdal de charnière (305) et la came de charnière (303) et appliquée étroitement sur le ressort hélicoïdal de charnière (305), et une partie centrale (304b) s'étendant d'un centre de la partie de contact (304a) dans la direction de l'axe de la charnière et traversant la came de charnière (303) et la tige de charnière (302), si bien que le ressort hélicoïdal de charnière (305) est adapté pour servir d'antenne hélicoïdale au terminal portable.

2. Terminal portable selon la revendication 1, comprenant en outre un ressort plat (32) dont la première extrémité libre est connectée à l'élément conducteur (304) et la seconde extrémité libre est connectée à une partie d'alimentation électrique.

3. Terminal portable selon la revendication 1, dans lequel la tige de charnière (302) comprend un premier trou débouchant (302c) le long de l'axe de la charnière et la came de charnière (303) comprend un second trou débouchant (303c) le long de l'axe de la charnière, si bien que la partie centrale (304b) de l'élément conducteur (304) traverse le premier et le second trous débouchants (302c, 303c).

4. Terminal portable selon la revendication 3, dans lequel le diamètre du premier et du second trous débouchants est supérieur à celui de la partie centrale de l'élément conducteur.

5. Terminal portable selon la revendication 1, dans lequel une extrémité (304c) de la partie centrale (304b) de l'élément conducteur (304) fait saillie par rapport à la tige de charnière (302).

6. Terminal portable selon la revendication 2, dans lequel la première extrémité libre du ressort plat (32) est étroitement appliquée sur une extrémité (304c) de la partie centrale (304b) de l'élément conducteur (304) par la force élastique du ressort plat (32).

7. Terminal portable comprenant un boîtier principal (10), un boîtier secondaire (20) et un récepteur à charnière ouvrant et refermant par rotation le boîtier secondaire (20) à partir du et sur le boîtier principal (10) et comprenant une tige de charnière (302) ayant une extrémité montée de manière solidaire sur le boîtier principal (10) et l'autre extrémité logée dans le boîtier secondaire (20) et servant à interconnecter le boîtier principal (10) et le boîtier secondaire (20), une came de charnière (303) coulissant sur la tige de charnière (302) et se déplaçant en va et vient et un ressort hélicoïdal de charnière disposé dans la direction de l'axe de la charnière et exerçant une force pour appliquer étroitement la tige de charnière (302) sur la came de charnière (303), ledit terminal portable comprenant en outre :
un élément conducteur (304) comprenant une partie de contact (304a) appliquée étroitement sur le ressort hélicoïdal de charnière (305) et une partie centrale (304b) s'étendant d'un centre de la partie de contact (304a) dans la direction de l'axe de la charnière et traversant le ressort hélicoïdal de charnière (305), la came de charnière (303) et la tige de charnière (302).

8. Terminal portable selon la revendication 7, comprenant en outre un ressort plat (32) avec une première extrémité libre connectée à l'élément conducteur (304) et une seconde extrémité libre connectée à une partie d'alimentation électrique.

9. Terminal portable selon la revendication 7, dans lequel la tige de charnière (302) comprend un premier trou débouchant (302c) le long de l'axe de la charnière et la came de charnière (303) comprend un second trou débouchant (303c) le long de l'axe de la charnière, si bien que la partie centrale (304b) de l'élément conducteur (304) traverse le premier et le second trous débouchants (302c, 303c).

10. Terminal portable selon la revendication 9, dans lequel le diamètre du premier et du second trous débouchants est supérieur à celui de la partie centrale (304b) de l'élément conducteur (304).

11. Terminal portable selon la revendication 7, dans lequel une extrémité (304c) de la partie centrale (304b) de l'élément conducteur (304) fait saillie par rapport à la tige de charnière (302).

12. Terminal portable selon la revendication 8, dans lequel la première extrémité libre du ressort plat (32) est étroitement appliquée sur une extrémité (304c) de la partie centrale (304b) de l'élément conducteur (304) par la force élastique du ressort plat (32).
